# EUROPÄISCHE PATENTSCHRIFT

(11) **EP 1 957 967 B1**
(45) Veröffentlichungstag und Bekanntmachung des Hinweises auf die Patenterteilung: **23.09.2015**
(21) Anmeldenummer: 06819345.7
(22) Anmeldetag: 09.11.2006
(51) Int. Cl.: H05B 3/14, G01N 27/406

(54) **SENSORELEMENT FÜR EINEN GASSENSOR MIT EINEM WIDERSTANDSHEIZER**
SENSOR ELEMENT FOR A GAS SENSOR HAVING A RESISTANCE HEATER
ELEMENT DE DETECTION POUR UN DETECTEUR DE GAZ DOTE D'UN DISPOSITIF DE CHAUFFAGE PAR RESISTANCE

(30) Priorität: 02.12.2005 DE 102005057566
(43) Veröffentlichungstag der Anmeldung: 20.08.2008
(73) Patentinhaber: ROBERT BOSCH GMBH, 70442 Stuttgart (DE)
(72) Erfinder: DIEHL, Lothar, 70839 Gerlingen (DE); VERDIER, Cyril, 70378 Stuttgart (DE)
(86) Internationale Anmeldenummer: PCT/EP2006/068265
(87) Internationale Veröffentlichungsnummer: WO 2007/062969

(56) Entgegenhaltungen:
- EP-A- 0 477 394
- EP-A2- 0 635 717
- DE-A1- 3 907 312
- DE-A1- 10 314 010
- DE-A1- 19 523 301
- DE-A1- 19 806 308
- DE-A1- 19 952 595
- JP-A- 3 183 942

## Beschreibung

### Stand der Technik

Die Erfindung geht aus von einem Sensorelement für einen Gassensor zur Messung einer physikalischen Eigenschaft eines Messgases, insbesondere der Konzentration einer Gaskomponente oder der Temperatur, nach dem Oberbegriff des Anspruchs 1.

Bei einem bekannten Sensorelement für einen als Sprung- oder λ=1-Sonde zur Messung der Sauerstoffkonzentration im Abgas von Brennkraftmaschinen (DE 103 14 010 A1) ausgebildeten Gassensor oder Messgasfühler weist der in einer elektrischen Isolierung eingebettete Widerstandsheizer einer elektrischen Heizvorrichtung eine den Heizbereich im Sensorkörper mäanderförmig überziehenden Widerstandsbahn auf, die zumindest abschnittweise in elektrisch parallel geschaltete Bahnäste unterteilt ist. Bevorzugt besitzt die Widerstandsbahn zwei außenliegende Bahnschenkel und dazwischen verlaufende Mäanderwindungen. Die Mäanderwindungen sind in die parallelgeschalteten Bahnäste unterteilt, die längs der Mäanderwindungen im Abstand voneinander und parallel zueinander verlaufen. Durch diese Ausbildung des Widerstandsheizers wird eine gleichmäßige Beheizung erreicht und gleichzeitig der Querschnitt der zur Einbettung des Widerstandsheizers erforderlichen Kanäle in der Isolierung, pro Bahnast klein gehalten. Dadurch werden die in der Isolierung an den Grenzflächen zu den Kanälen auftretenden Zugspannungen soweit verkleinert, dass sie unterhalb der für Rissbildung kritischen Zugspannung bleiben. Demzufolge ist auch ein größerer Heizwiderstand möglich. Weitere Sensorelemente sind in der DE 39 07 312 A1, der EP 0 477 394 A1, der DE 199 52 595 A1, der JP 03 183942, EP 0635717 A2, DE 195 23 301 A1 und der DE 198 06 308 angegeben.

### Offenbarung der Erfindung

Das erfindungsgemäße Sensorelement mit den Merkmalen des Anspruchs 1 hat den Vorteil, dass die in den einzelnen Strompfaden des Widerstandsheizers umgesetzte elektrische Leistung (P=U²/R) in allen Strompfaden gleich ist, somit die Strompfade gleichmäßig erwärmt werden und damit im Schichtverbund ein breiter Erwärmungsbereich ohne örtlich konzentrierte Überhitzungsstellen (hot spot) entsteht. Die umgesetzte Leistung sinkt mit zunehmender Temperatur, da der Widerstand der Strompfade mit steigender Temperatur zunimmt, die Gleichheit der Erwärmung in den Strompfaden bleibt aber unverändert erhalten. Bei lokaler Anblasung des Sensorelements kühlen sich die an der betroffenen Stelle liegenden Strompfade ab, wodurch sich zwar ihr elektrischer Widerstand verringert, gleichzeitig aber die umgesetzte elektrische Leitung ansteigt, da an jedem Strompfad die gleiche elektrische Heizerspannung liegt. Dadurch wird der Sensorkörper auch im Anblasbereich stärker erwärmt und die Temperatur dadurch hoch gehalten. Eine Veränderung der Temperaturverteilung im Sensorkörper durch das Anblasen wird also unterdrückt, so dass das Schnellstartverhalten, der Heizleistungsbedarf und die Elektrodeneigenschaften des Sensorelements sich nicht oder nur minimal verschlechtern.

Durch die in den weiteren Ansprüchen aufgeführten Maßnahmen sind vorteilhafte Weiterbildungen und Verbesserungen des im Anspruch 1 angegebenen Sensorelements möglich.

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: ausschnittweise eine perspektivische Ansicht eines Sensorelements mit einer elektrischen Heizvorrichtung,
- Fig. 2: ein Layout der Heizvorrichtung in Fig. 1,

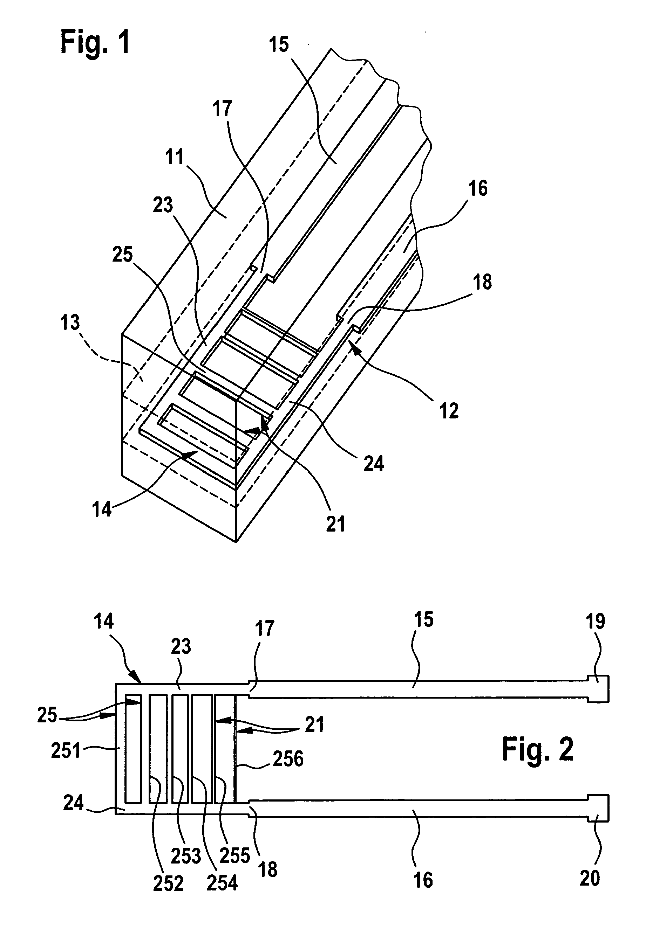

Das in Fig. 1 ausschnittweise in perspektivischer Ansicht dargestellte Sensorelement für einen Gassensor oder Messfühler, der zur Messung einer physikalischen Eigenschaft eines Messgases, insbesondere der Konzentration einer Gaskomponente oder der Temperatur, dient, ist beispielhaft für eine λ=1-Sonde oder für eine Breitband-Lambdasonde zur Messung der Sauerstoffkonzentration im Abgas von Brennkraftmaschinen konzipiert. Alternativ kann es auch für einen Temperaturmessfühler zur Messung der Abgastemperatur von Brennkraftmaschinen eingesetzt werden. Das Sensorelement weist einen keramischen, als Schichtverbund im Sensorkörper 11 auf, der beispielsweise aus mehreren Festelektrolytschichten zusammengesetzt ist. Ein möglicher Aufbau des Schichtverbunds ist in der DE 103 14 010 A1 dargestellt und beschrieben. Für eine genaue Messung muss das Sensorelement auf einer konstanten Betriebstemperatur gehalten werden, wozu im Sensorkörper 11 eine elektrische Heizvorrichtung 12 integriert ist, die innerhalb des Sensorkörpers 11 in eine elektrische Isolierung 13 eingebettet ist. Die elektrische Isolierung 13 innerhalb des Sensorkörpers 11 ist in Fig. 1 strichliniert angedeutet. Die elektrische Heizvorrichtung 12 weist einen Widerstandsheizer 14 auf, der an zwei innerhalb der Isolierung 13 verlaufenden Anschlussleiterbahnen 15, 16 angeschlossen ist. Die Anschlussstellen sind in Fig. 1 mit 17 und 18 bezeichnet. Wie hier nicht weiter dargestellt ist, sind die Anschlussleiterbahnen 15, 16 über endseitig ausgebildete Kontaktflächen 19, 20 an einer Gleichspannungsquelle angeschlossen, die eine konstante Gleichspannung an die Anschlussstellen 17, 18 des Widerstandsheizers 14 legt.

Der Widerstandsheizer 14 weist eine Mehrzahl von parallelgeschalteten Strompfaden 21 auf, die sich über einen flächenhaft ausgedehnten Heizbereich im Sensorkörper 11 erstrecken. Um eine gleichmäßige Temperaturverteilung über den Heizbereich zu erzielen, sind die Strompfade 21 so ausgebildet, dass sie von den Anschlussstellen 17, 18 des Widerstandsheizers 14 aus gesehen einen innerhalb eines Toleranzbereichs liegenden, gleich großen Ohmschen Widerstand aufweisen. Der Toleranzbereich ist auf ca. ± 2% des Ohmschen Widerstandes eines Strompfades 21 begrenzt. Die parallelgeschalteten Strompfade 21 mit gleichen Ohmschen Widerständen lassen sich mit unterschiedlichen Layouts realisieren, wie dies in Fig. 2 bis 5 dargestellt ist.

Im Layout der Fig. 2 weist der Widerstandsheizer 14 zur Ausbildung der Strompfade 21 zwei Leiterbahnäste 23, 24 und mehrere - im Ausführungsbeispiel sechs - Leiterbahnzweige 25 auf, die wegen ihrer unterschiedlichen Ausbildung mit 251 bis 256 bezeichnet sind. Die beiden Leiterbahnäste 23, 24 sind jeweils an einer der beiden Anschlussstellen 17, 18 an den Anschlussleiterbahnen 15, 16 angeschlossen. Die zueinander parallel ausgerichteten und im Abstand voneinander verlaufenden Leiterbahnzweige 25 sind endseitig einstückig mit den Leiterbahnästen 23, 24 verbunden. Die Leiterbahnzweige 25 sind in ihren Abmessungen so konzipiert, dass sie zusammen mit ihren Zuleitungsabschnitten in den Leiterbahnästen 23, 24 den gleichen Ohmschen Widerstand besitzen. Da alle Leiterbahnzweige 25 eine gleiche Länge aufweisen, wächst somit ihr Querschnitt mit zunehmender Entfernung von den Anschlussstellen 17, 18 an. Der von den Anschlussstellen 17, 18 am weitesten entfernt liegende Leiterbahnzweig 251 hat somit den größten Querschnitt, da in den von ihm gebildeten Strompfad 21 auch der Ohmsche Widerstand beider Leiterbahnäste 23,24 eingeht. Der den Anschlussstellen 17, 18 am nächsten liegende Leiterbahnzweig 256 hat den kleinsten Querschnitt, da in den Ohmschen Widerstand des Strompfads 21, in dem der Leiterbahnzweig 256 liegt, nur ein kleiner Abschnitt der beiden Leiterbahnäste 23, 24 eingeht.

## Patentansprüche

1. Sensorelement für einen Gassensor zur Messung einer physikalischen Eigenschaft eines Messgases, insbesondere der Konzentration einer Gaskomponente oder der Temperatur, mit einer in einem keramischen Sensorkörper (11) angeordneten, elektrischen Heizvorrichtung (12), die Anschlussleiterbahnen (15, 16) und einen an Anschlussstellen (17, 18) der Anschlussleiterbahnen (15, 16) angeschlossenen Widerstandheizer (14) aufweist, der über einen im Sensorkörper (11) flächig ausgedehnten Heizbereich (22) sich erstreckende, parallelgeschaltete Leiterbahnen (21) aufweist, wobei zur Ausbildung der Leiterbahnen (21) der Widerstandsheizer (14) zwei Leiterbahnäste (23, 24), von denen jeder an einer Anschlussstelle (17, 18) des Widerstandsheizers (14) angeschlossen ist, und mehrere, an den beiden Leiterbahnästen (23, 24) angeschlossene Leiterbahnzweige (25) aufweist, **dadurch gekennzeichnet, dass** die Leiterbahnzweige (25) zusammen mit ihren Zuleitungsabschnitten in den beiden Leiterbahnästen (23, 24) so ausgebildet sind, dass sie von den Anschlussstellen (17, 18) aus gesehen einen im Toleranzbereich, der mit ± 2% festgelegt ist, gleich großen Ohmschen Widerstand aufweisen und dass der Querschnitt der Leiterbahnzweige mit zunehmender Entfernung der Leiterbahnzweige von den Anschlussstellen anwächst.

2. Sensorelement nach Anspruch 1, **dadurch gekennzeichnet, dass** die Leiterbahnäste (23, 24) einen größeren Querschnitt aufweisen als die Leiterbahnzweigs (25).

3. Sensorelement nach Anspruch 1 oder 2, **dadurch gekennzeichnet, dass** die Leiterbahnzweige (25) gleich lang sind.

4. Sensorelement nach einem der Ansprüche 1 bis 3, **dadurch gekennzeichnet, dass** die Leiterbahnäste (23, 24) einerseits und die Leiterbahnzweige (25) andererseits jeweils mit Abstand voneinander parallel zueinander verlaufen.

## Claims

1. Sensor element for a gas sensor for measuring a physical property of a measuring gas, in particular the concentration of a gas component or the temperature, having an electric heating device (12) which is arranged in a ceramic sensor body (11) and has connecting conductor tracks (15, 16) and a resistance heater (14) which is connected to connecting points (17, 18) of the connecting conductor tracks (15, 16) and has conductor tracks (21) which are connected in parallel and extend over a heating region (22) which has a planar extent in the sensor body (11), wherein in order to form the conductor tracks (21) the resistance heater (14) has two conductor track paths (23, 24), each of which is connected to a connecting point (17, 18) of the resistance heater (14), and a plurality of conductor track branches (25) which are connected to the two conductor track paths (23, 24), **characterized in that** the conductor track branches (25) are embodied, together with their feed line sections, in the two conductor track paths (23, 24) in such a way that, when viewed from the connecting points (17, 18), they have an equally large ohmic resistance in the tolerance range which is defined by ±2%, and **in that** the cross section of the conductor track branches grows with increasing distance of the conductor track branches from the connecting points.

2. Sensor element according to Claim 1, **characterized in that** the conductor track paths (23, 24) have a larger cross section than the conductor track branches (25) .

3. Sensor element according to Claim 1 or 2, **characterized in that** the conductor track branches (25) are of equal length.

4. Sensor element according to one of Claims 1 to 3, **characterized in that** the conductor track paths (23, 24), on the one hand, and the conductor track branches (25), on the other, each run at a distance from one another and parallel with one another.

## Revendications

1. Elément de détecteur pour un détecteur de gaz pour la mesure d'une propriété physique d'un gaz de mesure, en particulier de la concentration en un composant du gaz ou de la température, comprenant un dispositif de chauffage électrique (12) disposé dans un corps de détecteur céramique (11), qui présente des pistes conductrices de raccordement (15, 16) et un élément chauffant à résistance (14) raccordé à des points de raccordement (17, 18) des pistes conductrices de raccordement (15, 16), lequel présente des pistes conductrices (21) branchées en parallèle, s'étendant sur une zone de chauffage (22) étirée à plat dans le corps de détecteur (11), l'élément chauffant à résistance (14), pour la réalisation des pistes conductrices (21), présentant deux branches de piste conductrice (23, 24), dont chacune est raccordée à un point de raccordement (17, 18) de l'élément chauffant à résistance (14) et plusieurs dérivations de piste conductrice (25) raccordées aux deux branches de piste conductrice (23, 24), **caractérisé en ce que** les dérivations de piste conductrice (25) conjointement avec leurs portions de conduites d'amenée dans les deux branches de piste conductrice (23, 24) sont réalisées de telle sorte qu'elles présentent, vu depuis les points de raccordement (17, 18), une résistance ohmique identique dans une plage de tolérances établie à ± 2 %, et **en ce que** la section transversale des dérivations de piste conductrice augmente avec l'augmentation de la distance des dérivations de piste conductrice aux points de raccordement.

2. Elément de détecteur selon la revendication 1, **caractérisé en ce que** les branches de piste conductrice (23, 24) présentent une plus grande section transversale que les dérivations de piste conductrice (25).

3. Elément de détecteur selon la revendication 1 ou 2, **caractérisé en ce que** les dérivations de piste conductrice (25) sont de même longueur.

4. Elément de détecteur selon l'une quelconque des revendications 1 à 3, **caractérisé en ce que** les branches de piste conductrice (23, 24) d'une part et les dérivations de piste conductrice (25) d'autre part s'étendent à chaque fois parallèlement à distance les unes des autres.
